# EUROPEAN PATENT SPECIFICATION

(11) **EP 0 515 481 B1**
(45) Date of publication and mention of the grant of the patent: **14.09.1994**
(21) Application number: 91904381.0
(22) Date of filing: 12.02.1991
(51) Int. Cl.: B60R 5/04, B60N 2/36

(54) **LOAD RESTRAINING DEVICE**
LASTSICHERUNGSVORRICHTUNG
DISPOSITIF DE RETENUE POUR CHARGEMENTS

(30) Priority: 16.02.1990 SE 9000549
(43) Date of publication of application: 02.12.1992
(73) Proprietor: AB VOLVO, 405 08 Göteborg (SE)
(72) Inventor: PILHALL, Stig, S-461 53 Trollhättan (SE)
(74) Representative: Kristiansen, Alf P.
(86) International application number: SE9100093
(87) International publication number: WO9112155

(56) References cited:
- EP-A- 0 258 823
- DE-A- 3 729 642
- DE-C- 2 759 777
- US-A- 3 891 263

## Description

### Technical field:

The present invention relates to a rollably retractable cargo-retaining net, primarily for estate cars, the object of which being to protect passengers from loose articles flying around as a result of a heavy retardation.

### Background and problems:

Nowadays it is generally known to make use of cargo-retaining nets in estate cars (station wagons). The cargo-retaining net screens off a rear space from a front space so that the cargo, during heavy braking for example, will not be thrown forwards into the passenger space. The most usual type of cargo net comprises a rigid frame within which a net is affixed. The frame is arranged with means so as to be able to be removably affixed between the rear backrest and the roof. This type of cargo-retaining net presents the disadvantage that when not in use it occupies unnecessary space. Neither is it aesthetically pleasing and, because of its dimensions, it is difficult to stow away in a convenient manner. Furthermore, they cannot be used in a forward cargo-retaining position.

Cargo-retaining nets are previously known from DE-C-2 759 777 and US-A-3 891 263 which, in principle, solve the above-mentioned problems in that they are made rollably retractable. These known solutions do, however, present several disadvantages. DE-C-2 759 777 firstly suffers from the disadvantage that the net unit is not integral with the rear seat backrest, which can give rise to injury and is seem to be aesthetically detrimental. Secondly, such a unit does not permit the desired flexibility; it is for example not possible with split rear seats to fold only the wide seat back if the unit is mounted thereto.

US-A-3 891 263 (corresponding to the preamble of claim 1) shows a rollably retractable cargo-retaining net which can at least partially screen off a front space from a rear space of a motor vehicle, particularly of the estate car type, whereby the net in its retracted condition is arranged in a net container which is positioned in, and forms an integral unit with, the backrest, and the net is, at its withdrawable end, provided with first fastening means which are intended to cooperate with second fastening means attached to the vehicle for fixing of the net in its withdrawn condition.

This latter-mentioned cargo-retaining net is not intended to be used in vehicles with foldable rear seat backrests. This known cargo-retaining net is particularly not intended, or adapted, for application where the rear seat backrest is split. Such a division of the rear seat backrest offers many advantages and is therefore nowadays frequently installed in estate cars.

### Solution and advantages:

The object of the present invention is to provide a rollably retractable cargo-retaining net which overcomes the above mentioned disadvantages and which is suitable for use in vehicles in which the rear seat backrest is split and at least one of the parts is foldable.

Said object is achieved by means of a rollably retractable cargo-retaining net according to the features specified in the characterising portion of claim 1.

The invention shall be described in more detail in the following with help of a preferred embodiment, with reference to the attached drawings in which;
- Fig. 1: shows a part of a vehicle seen in a perspective oblique rear view, wherein a cargo-retaining net in accordance with the invention is arranged on a split rear seat backrest,
- Fig. 2: shows a split rear seat backrest with a cargo-retaining net according to the invention, seen from the rear,
- Fig. 3: shows,in perspective, selected upper parts of a cargo-retaining net in accordance with the invention,
- Fig. 4: shows coupling elements for connecting together the adjacent extended cargo-retaining net edges,
- Figs 5 and 6: show a first alternative embodiment of the coupling elements,
- Figs 7 and 8: show a second alternative embodiment of such coupling elements,
- Fig. 9: shows a vertical section through a backrest which is provided with an arrangement according to the invention,
- Fig. 10: shows a preferred attachment means, and
- Fig. 11: shows a vertical section as in Fig. 9, though with the net in its retracted position.

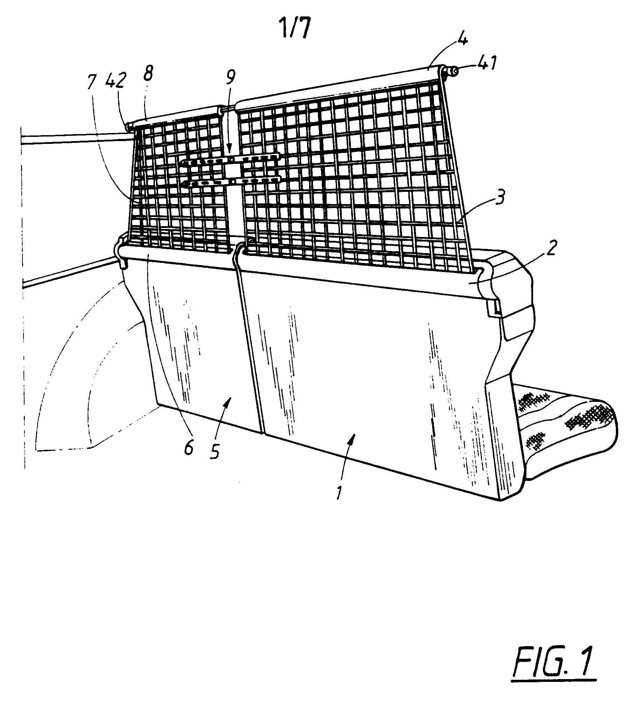

In Fig. 1 a rear seat backrest is shown which is split into two parts 1, 5 which can be independently raised and lowered. The division is made in such a way that approximately 1/3 of the backrest 5 can have its position changed independently of the position of the second part 1 which occupies approximately 2/3 of the total width.

In the upper end of each backrest part 1, 5 respectively, there is arranged integrally therewith a net container 2, 6 respectively. A rollably retractable net 3, 7 resp. is arranged in the net container. The free net ends each present a continuous profile piece 4, 8 respectively.

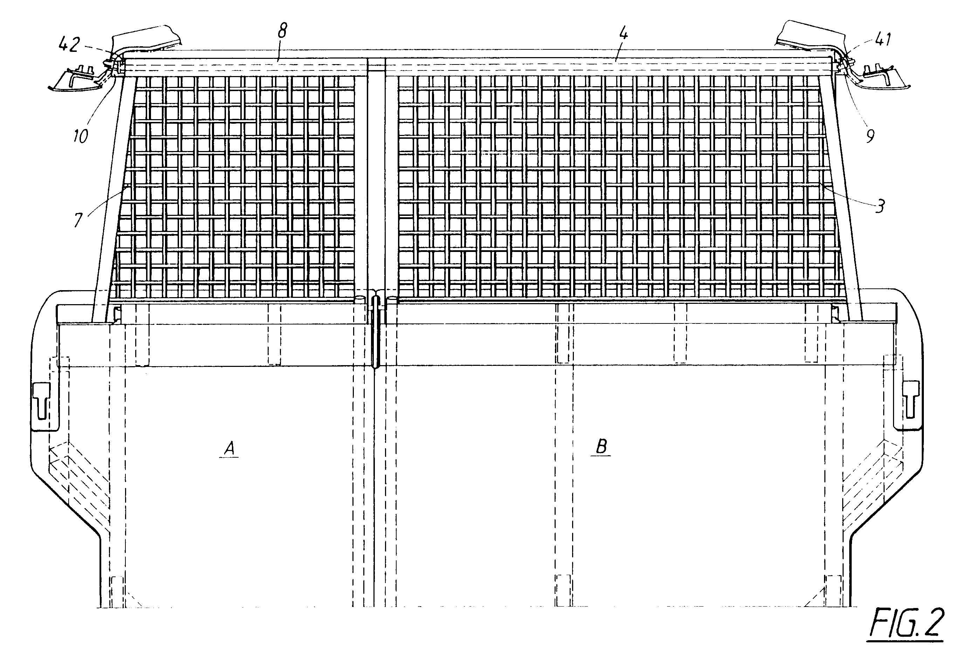

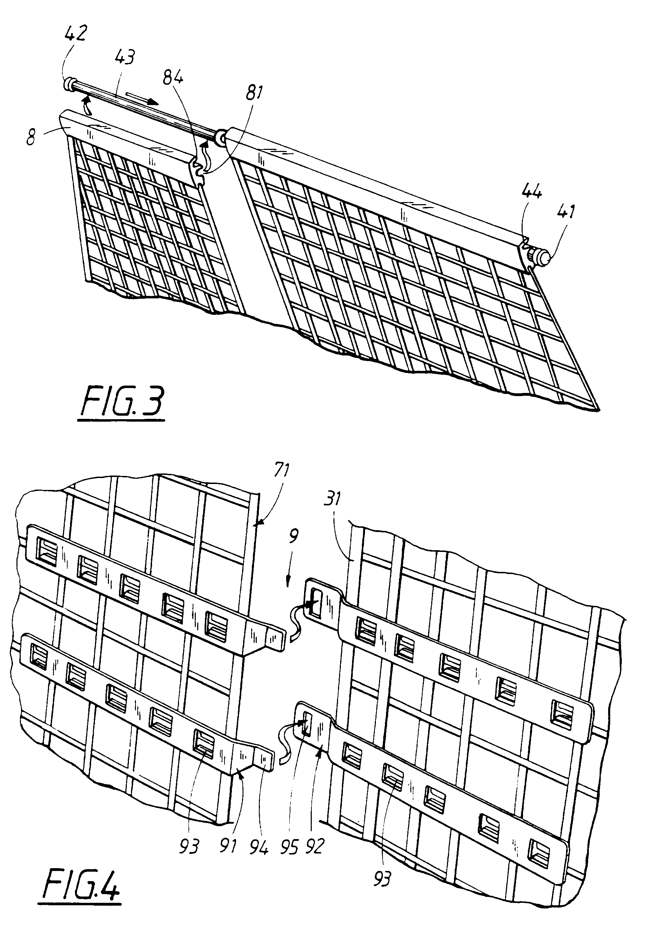

The profile piece 4, which is arranged on the wider backrest 1, is provided with fastening means 41, 42. These fastening means 41, 42 are intended to cooperate with attachment means 9, 10 arranged on the body (see Fig. 2) so that the net can be affixed in its extended position. One 42 of these fastening means is arranged on a telescopically extendable rod 43 (see Fig. 3). For affixing the other net 7 in its extended position, it is provided with a profile piece 8 on its free end which can be clipped onto said extendable rod 43. To prevent objects from being able to slip through between the inner net edges 31, 71 both the net parts 3, 4 are provided with coupleable elements 9.

In Fig. 2, in a rear view, it is shown that the fastening means 41, 42, which are arranged on the one profile piece 4 in the extended position, are hooked into cooperating attachment means 9, 10 which are affixed in rigid parts, suitably roof welds, in the vehicle's roof region. In the case where the wider backrest 1 is in its folded position, the net 3 can be withdrawn and fixed in its extended condition in a front attachment arrangement. This further attachment arrangement corresponds in shape and height level with those 9, 10 which are affixed on the door welds. These additional attachment arrangements are positioned further forward in the vehicle so that the net can even here extend substantially at right angles to the vehicle's longitudinal direction. These latter-mentioned forward attachment arrangements are suitably built into the car's rear grab handles. The attachments (both front and rear) are so formed that they can take up the maximum force which is thought likely to affect the cargo net during a frontal collision, i.e. a force directed forwards and downwards.

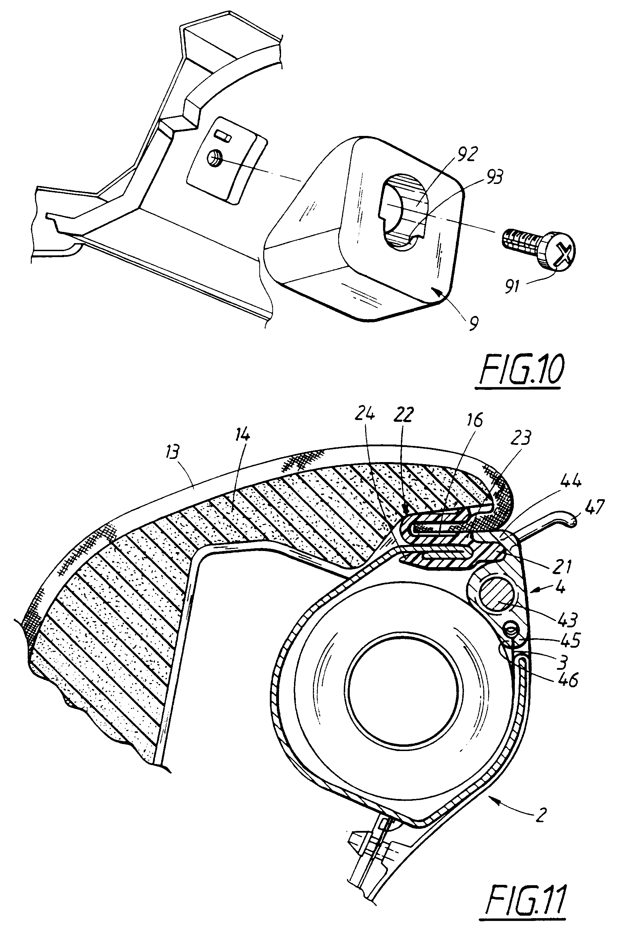

Fig. 10 shows in perspective how such an attachment means 9 is shaped in a preferred case. The fastener 9 is intended to be fixed to the roof weld by means of a screw 91. The fastener presents a keyhole-shaped recess 92 whose upper portion is large enough to give free access for the fastening means 42 with which it is intended to cooperate. The lower portion of the recess presents a flange 93 which secures said means 42 when it is pushed down thereinto.

From Fig. 3 it can be seen that the one profile piece 8 is formed with a continuous recess 81 which is formed in such a way that the smaller net 7 with its profile piece 8 can be fixedly clipped to the extended rod 43. Furthermore, it can be seen that each profile piece 4, 8 is formed with an easily grippable flange 44, 84, intended to surround and conceal load bearing locking elements 21.

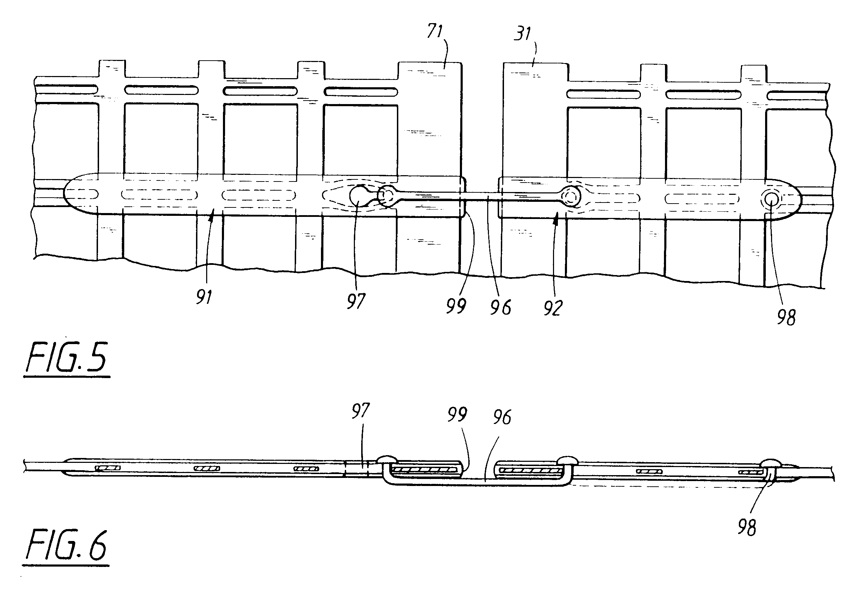

Fig. 4 shows a first embodiment of connectable elements 9 which are intended to prevent objects from slipping through the slot between the two net parts 3, 7. In this first alternative embodiment, these elements 9 consist of elongate steel strips, each being fixedly clipped to a net mesh with the help of foldable tabs 93. On the one net edge 71, two male elements 91 are arranged which have a tongue 94 which is intended to be inserted into an opening 95 in a female element 92 which is arranged in a similar manner on the other nets edge 31. Further visible from this figure, as well as the previous ones, is that a stitched net has been used. A woven net can however also be suitable. The advantage with the stitched type is that it is similarly strong in both directions.

A second alternative embodiment of the connection element 9 is shown in Fig. 5 and 6. A plastic piece 91, 92 is affixed to each net edge. These pieces are suitably of the "snap-together" type with a division down the middle 95. They are accordingly attached to the net edge by being folded at the middle 95, round the net edge whereafter the two halves can be snapped together. The snap means can be one of a plurality of known types. A hole 97 having a slot is provided in the female element 91. This slot-equipped hole 97 is intended to cooperate with a hook 96, suitably made from metal, which is pivotably arranged in the male element 92. The male element 92 is also provided with a recess 98. This recess 98 in the male element is to secure the hook 96 in its inactive position to prevent it being thrown around (see the dashed position in Fig. 6).

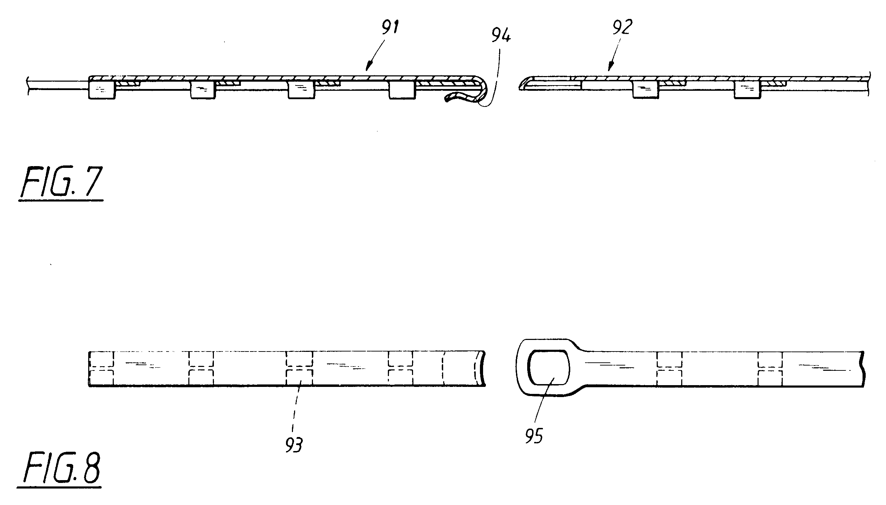

A preferred embodiment of the coupling elements 9 is shown in figures 7 and 8. Here, a hook and eye 95 system is adopted. The female piece 92 is displaceable so that the connecting operation can be achieved. As in Fig. 5 and 6, foldable parts 93 are suitably employed for affixing the pieces 9.

Common for all the connection pieces 9 is that they are distributed along each net in such a way that in the rolled-up condition the do not lay one above the other. In this way the maximum diameter which is formed by the rolled-up net is reduced.

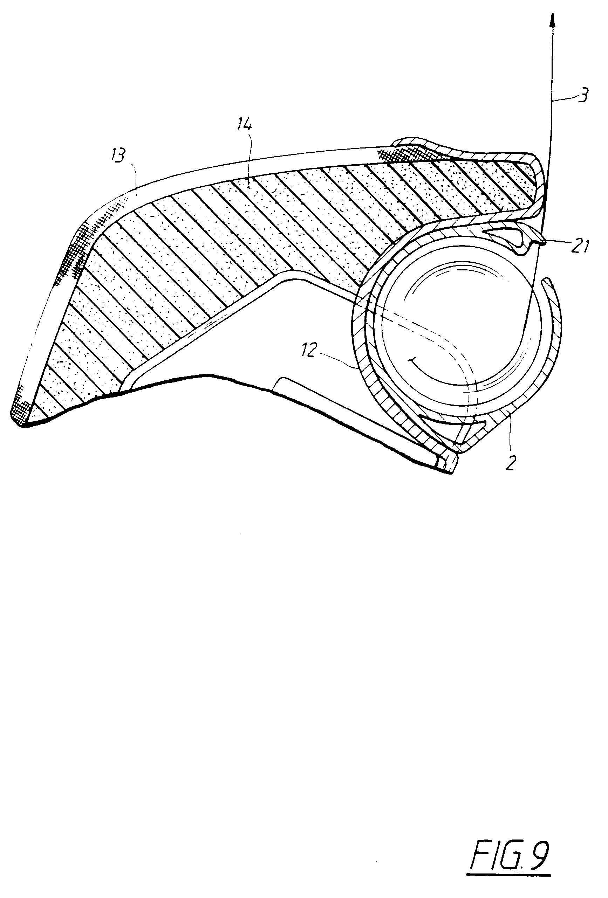

A net 3 with its container 2 is shown in Fig. 9 arranged on a backrest 1. The net container 2 is hereby arranged in an integral and aesthetic manner in the backrest 1. In order to obtain a durable fastening of the net container 2, it is arranged in a transversally extending member 12, provided in the backrest 1. The member 12 and other force bearing parts are connected by a stable frame construction, dimensioned so that the force which is incurred by a load of fair weight in a collision can be borne thereby. The outer surface of the seat 1 is covered by a fabric 14, which encloses a stuffing 13 in a known way.

Fig. 11 shows a preferred embodiment which in principle shows the same section as in the alternative embodiment according to Fig. 9. Fig. 11 shows the net 3 in its rolled-up state. The profile piece 4 is hereby substantially flush with other adjacent parts 13, 2 of the backrest. The telescopic part 43 is arranged within the profile piece. The profile piece's lower part presents two tongues 45, 46 which have been bent into contact with each other so that the net's upper part is securely fastened. This solution means that it is easier to fulfil existing rear view requirements (for example FMVSS 111) when the net is withdrawn and fastened up, since such a fastening does not form anything, as opposed to the use of an intermediate part to which the net is fixedly sewn. Furthermore, this preferred fastening manner gives a more effective fixation and a more aesthetic embodiment.

Fig. 11 further shows that the profile piece 4 is equipped with gripable withdrawal straps 47 and how the upper flange 44 clasps and conceals the locking member 21. This locking member 21, which is made up of a plurality of projecting elements distributed along the entire length of the container, is integral with an S-shaped strip 22. The strip 22 is affixed to the container by being clipped to a projecting edge and maintained with the help of a stop member 24. The upper part of the strip 22 is used to attach the fabric 13 which encloses the stuffing 14 of the seat. For this purpose, the strip is formed with a further stop member 23, which cooperates with a plastic part 16 which is fixedly sewn to the fabric 13.

The invention is not restricted to that shown above, but can be varied within the scope of the appended claims. Accordingly it is, for example, possible, that instead of a telescopically extendable rod 43, to provide the vehicle with a wire at each desired fastening location to which the two net parts can be hooked. This gives the advantages that the small net section 7 can also be erected individually. A further alternative embodiment is to fit a bracket in line with the division (in the shown example ca 1/3) of the backrest. The roof construction of most vehicles is not, however, suited for attachment of such a bracket at a corresponding point.

In addition, the invention is not restricted to a rear seat which is split in two parts at a third of its width. Other split widths, such as a central division, are also possible, as is providing the rear seat with more than one division. A further alternative is to have the net erectable only when the seat is in its raised position. Such a solution implies that the lock member 21 becomes superfluous, since the length of the net can then provide the locking factor.

In the figures it is shown that two coupling elements are used. It is, however, clear to the skilled man that this number can be varied within wide limits in accordance with what is seen to be most suitable. It ought to be pointed out that several coupling elements 9 are of course required when both of the net parts are extended in the forward position, i.e. when the backrests 1, 5 are in the folded down position. Furthermore, the taps 93 for fastening the coupling elements 9 can also be arranged to engage two rather than one mesh. The net containers 2 are suitably provided with spring means for automatic retraction of the net.

If the car is equipped with fasteners 9, 10 in accordance with the above described, these can also be used to fix a conventional non-divided net. A preferred solution is thus to make use of a rod which extends the whole way across the roof, and which at least at its one end has a telescopic member, suitably influenced by an outwardly-directed elastic force so that it can be easily hooked up by being snapped in. The rod is removed by pulling a device which influences said member with an inwardly-directed compressive force and simultaneously lifting the rod from the fasteners 9, 10.

The skilled man will recognize that some of the components which make up the invention are not restricted to use in vehicles with divided, foldable back seats. Accordingly, by way of example, the strip 22 can also advantageously be used on non-divided rear seats. The described fasteners 9, 10 can also be used in connection with this latter mentioned embodiment. Furthermore, the invention is not restricted to the described fasteners 9, 10, and other variations are imaginable. For example, one such variation would be to insert the fastening means 41, 42 into a rearwardly open slot, which is provided with suitable stop means.

## Claims

1. A rollably retractable cargo-retaining net for at least partially screening off a front space from a rear space in a motor vehicle, particularly of the estate car type, whereby the net (3) in its rolled up condition is arranged in a net container (2) provided on, and forming an integral unit with, a backrest (1), and the net (3) is provided at its withdrawable end (4) with first fastening means (41, 42) which, for fastening the net (3) in its extended condition, are intended to cooperate with second fastening means (9, 10) affixed to the vehicle, **characterized in** that a first net unit (2, 3, 4) is provided on a first part (1) of said backrest, in that at least a further net unit (6, 7, 8) is provided on at least a further part (5) of said backrest, whereby at least one of said backrest parts is foldably arranged between a substantially horizontal position and a substantially vertical position, and that the two parts (1, 5), at least in the substantially vertical position, substantially extend in the same plane, and in that said first net unit (2, 3, 4) is provided at its withdrawable end (4) with a telescopically extendable rod (43) whose free end carries one (42) of said first fastening means (41, 42) and that the withdrawable end (8) of the further net unit (6, 7, 8) presents means (81) for connecting to said rod (43).

2. Rollably retractable cargo-retaining net according to claim 1, **characterized in** that each free net end (4, 8) presents a continuous profile piece (4, 8) whose outer continuous part (44, 84) is designed to clasp and conceal locking elements (21) for the net (3).

3. Rollably retractable cargo-retaining net according to claim 1, **characterized in** that the net's (3) upper end is arranged on a profile piece (4, 8) by clamping with help of two tongues (45, 46) provided on each profile piece (4, 8).

4. Rollably retractable cargo-retaining net according to claim 1, **characterized in** that two adjacent net side pieces (31, 71) are provided with coupleable elements (9), so that the gap which is formed therebetween in the extended condition can be partially closed.

5. Rollably retractable cargo-retaining net according to claim 3, **characterized in** that said elements (9) are distributed in such a way that they do not overlap in the rolled-up net (3, 7).

6. Rollably retractable cargo-retaining net according to claim 1, **characterized in** that the net container (2) is provided with a strip (22) which presents locking elements (21) for the net.

7. Rollably retractable cargo-retaining net according to claim 1, **characterized in** that said strip (22) is S-shaped and presents first stop members (23) for holding one end (13, 16) of the seat fabric (13) and a second stop member (24) for fastening the strip to the container (2).

8. Rollably retractable cargo-retaining net according to claim 1, **characterized in** that said second fastening means (9, 10) is in the form of a keyhole-shaped recess (92) with a lower-part including a flange (93).

## Patentansprüche

1. Aufrollbares Netz zum Sichern einer Ladung zum wenigstens teilweisen Abschirmen eines Vorderraums von einem Hinterraum in einem Kraftfahrzeug, insbesondere einem Kombiwagen, wobei das Netz (3) in seinem aufgerollten Zustand in einem Netzbehälter (2) untergebracht ist, der an der Rückenstütze (1) vorgesehen ist und eine integrale Einheit damit bildet, und das Netz (3) an seinem zurückziehbaren Ende (4) mit ersten Befestigungseinrichtungen (41, 42) versehen ist, die zum Befestigen des Netzes (3) in seinem ausgerollten Zustand mit zweiten Befestigungseinrichtungen (9, 10) zusammenwirken sollen, die an dem Fahrzeug angebracht sind,
**dadurch gekennzeichnet,** daß
eine erste Netzeinheit (2, 3, 4) an einem ersten Teil (1) der Rückenstütze vorgesehen ist, daß wenigstens eine weitere Netzeinheit (6, 7, 8) an wenigstens einem weiteren Teil (5) der Rückenstütze vorgesehen ist, wobei wenigstens einer der Rückenstützenteile faltbar zwischen einer im wesentlichen horizontalen Position und einer im wesentlichen vertikalen Position angeordnet ist, und daß sich die zwei Teile (1, 5) wenigstens in der im wesentlichen vertikalen Position im wesentlichen in derselben Ebene erstrecken, und daß die erste Netzeinheit (2, 3, 4) an ihrem zurückziehbaren Ende (4) mit einem teleskopartig ausfahrbaren Stab (43) versehen ist, dessen freies Ende eine der ersten Befestigungseinrichtungen (41, 42) trägt, und daß das zurückziehbare Ende (8) der weiteren Netzeinheit (6, 7, 8) eine Einrichtung (81) zur Verbindung mit dem Stab darstellt.

2. Aufrollbares Netz zum Sichern einer Ladung nach Anspruch 1, dadurch gekennzeichnet, daß jedes freie Netzende (4, 8) ein kontinuierliches Profilstück (4, 8) darstellt, dessen äußerer kontinuierlicher Teil (44, 84) derart aufgebaut ist, daß er Verriegelungselemente (21) für das Netz (3) umgreift und verdeckt.

3. Aufrollbares Netz zum Sichern einer Ladung nach Anspruch 1, dadurch gekennzeichnet, daß das obere Ende des Netzes (3) an einem Profilstück (4, 8) durch Anklemmen mit Hilfe zweier Zungen (45, 46) angeordnet ist, die an jedem Profilstück (4, 8) vorgesehen sind.

4. Aufrollbares Netz zum Sichern einer Ladung nach Anspruch 1, dadurch gekennzeichnet, daß zwei benachbarte Netzseitenstücke (31, 71) mit koppelbaren Elementen (9) versehen sind, so daß die Lükke, die in dem ausgerollten Zustand dazwischen ausgebildet wird, teilweise geschlossen werden kann.

5. Aufrollbares Netz zum Sichern einer Ladung nach Anspruch 4, dadurch gekennzeichnet, daß die Elemente (9) derart verteilt sind, daß sie sich in dem aufgerollten Netz (3, 7) nicht überlappen.

6. Aufrollbares Netz zum Sichern einer Ladung nach Anspruch 1, dadurch gekennzeichnet, daß der Netzbehälter (2) mit einem Band (22) versehen ist, das Verriegelungselemente (21) für das Netz darstellt.

7. Aufrollbares Netz zum Sichern einer Ladung nach Anspruch 6, dadurch gekennzeichnet, daß das Band (22) S-förmig ist und erste Sperrelemente (23) zum Halten eines Endes (13, 16) des Sitzstoffes (13) und ein zweites Sperrelement (24) zum Befestigen des Bandes an dem Behälter (2) darstellt.

8. Aufrollbares Netz zum Sichern einer Ladung nach Anspruch 1, dadurch gekennzeichnet, daß die zweite Befestigungseinrichtung (9, 10) die Form einer schlüssellochförmigen Aussparung (92) mit einem unteren Teil einschließlich eines Flansches (93) hat.

## Revendications

1. Filet de retenue de chargement rétractable par enroulement destiné à isoler au mains partiellement un espace avant d'un espace arrière dans un véhicule automobile, en particulier du type break, dans lequel le filet (3), à l'état enroulé, est logé dans un conteneur de filet (2) prévu sur un dossier de siège (1) et formant une unité intégrée avec le dossier et, à son extrémité rétractable (4), le filet (3) est muni de premiers moyens de fixation (41, 42) qui sont destinés à coopérer avec des deuxièmes moyens de fixation (9, 10) fixés au véhicule pour fixer le filet (3) dans son état déployé, caractérisé en ce qu'une première unité de filet (2, 3, 4) est prévue sur une première partie (1) dudit dossier, en ce qu'au moins une autre unité de filet (6, 7, 8) est prévue sur au moins une autre partie (5) dudit dossier, au moins une desdites parties du dossier étant disposée de façon à pouvoir pivoter entre une position sensiblement horizontale et une position sensiblement verticale, en ce que, du moins dans la position sensiblement verticale, les deux parties (1, 5) s'étendent sensiblement dans le même plan et en ce que ladite première unité de filet (2, 3, 4) est munie, à son extrémité rétractable (4), d'une tige (43) télescopiquement extensible dont l'extrémité libre porte l'un (42) desdits premiers moyens de fixation (41, 42) tandis que l'extrémité rétractable (8) de l'autre unité de filet (6, 7, 8) présente des moyens (81) destinés à s'assembler à ladite tige (43).

2. Filet de retenue de chargement rétractable par enroulement selon la revendication 1, caractérisé en ce que chaque extrémité libre (4, 8) du filet présente une pièce profilée continue (4, 8) dont la partie continue extérieure (44, 84) est construite pour emboîter et dissimuler des éléments de verrouillage (21) servant à verrouiller le filet (3).

3. Filet de retenue de chargement rétractable par enroulement selon la revendication 1, caractérisé en ce que l'extrémité supérieure du filet (3) est montée sur une pièce profilée (4, 8) par serrage à l'aide de deux languettes (45, 46) prévues sur chaque pièce profilée (4, 8).

4. Filet de retenue de chargement rétractable par enroulement selon la revendication 1, caractérisé en ce que deux pièces latérales adjacentes (31, 71) du filet sont munies d'éléments accouplables (9) de telle manière que l'intervalle laissé libre entre ces pièces dans la position déployée puisse être partiellement fermé.

5. Filet de retenue de chargement rétractable par enroulement selon la revendication 1, caractérisé en ce que lesdits éléments (9) sont répartis de manière à ne pas se recouvrir dans le filet (3, 7) enroulé.

6. Filet de retenue de chargement rétractable par enroulement selon la revendication 1, caractérisé en ce que le conteneur (2) du filet est muni d'une bande (22) qui présente des éléments de verrouillage (21) pour le verrouillage du filet.

7. Filet de retenue de chargement rétractable par enroulement selon la revendication 1, caractérisé en ce que ladite bande (22) est en forme de S et présente des premiers éléments de butée (23) servant à retenir une extrémité (13, 16) du tissu (13) du siège et un deuxième élément de butée (24) servant à fixer la bande au conteneur (2).

8. Filet de retenue de chargement rétractable par enroulement selon la revendication 1, caractérisé en ce que lesdits deuxièmes moyens de fixation (9, 10) se présentent sous la forme d'un évidement (92) en trou de serrure dont une partie inférieure présente un rebord (93).
